# EUROPEAN PATENT APPLICATION

(11) **EP 2 781 302 A1**
(43) Date of publication of application: **24.09.2014**
(21) Application number: 13853973.9
(22) Date of filing: 07.11.2013
(51) Int. Cl.: B23Q 3/06, B23Q 3/04, B23Q 3/00

(54) **AUTOMATIC DEVICE FOR SECURING PARTS**

(30) Priority: 12.11.2012 BR 102012028901
(71) Applicant: Whirlpool S.A., 04578-000 São Paulo - SP (BR)
(72) Inventor: FISHER, Roberto, 89204-643 Joinville - SC (BR); CARDOSO, Marcio Evandro, 89211-610 Joinville- SC (BR); MENDES, João Manoel, 89220-020 Joinville - SC (BR)
(74) Representative: Soldatini, Andrea
(86) International application number: PCT/BR2013/000476
(87) International publication number: WO 2014/071486

(57) **Abstract**

The present invention refers to an automatic fixing device for workpieces to be worked, particularly by machining, forming, reducing or expanding the workpieces. More preferably, said automatic device, in accordance with the present invention, comprises technical and innovative features which permit to safely and precisely fix a work piece in order to improve the operator security. Objectively speaking, said automatic fixing device for workpieces comprises a carcass (1), which base is provided with at least one actuator (2) to move an advance rod (3), on which support movable locking elements (4) rest, which perpendicularly drive press jaws (5) for suitable fixation of a work piece to be worked.

## Description

### Field of the Invention

The present invention refers to a fixing device for workpieces applied to apparatus of lathe and milling machine types, ou any other especial apparatus in which said workpieces need to be fixed in a precise and resistant way. Preferably, the device of the present invention relates to a tool to be used in apparatus for carrying out processes for machining, forming, reducing and expanding workpieces which may comprise a variety of geometries and made of different materials.

More preferably, the fixing device for workpieces, in accordance with the present invention, comprises technical and innovative features capable of fixing a work piece to be safely and mainly precisely worked (machined, formed, reduced or expanded). Furthermore, it refers to a tool comprising an automatic actuation mechanism, which configuration allows for reduction and optimization of dimensions of apparatuses.

### Background of the Invention

According to the general knowledge of the state of the art, some models of apparatuses for working pieces are known (machining, forming, reducing and expanding), also known as lathes, milling achiness or other especial apparatuses for working on workpieces. Such apparatuses comprise a tool responsible for holding the work piece to be worked (machined, formed, reduced or expanded), wherein said tool is a fixing device for the work piece, also known as vise, for fixing and locking the work piece to be worked in relation to the apparatus, and more particularly in relation to a machining tool.

In conventional and more commonly apparatus known in the prior art, it is observed that said fixing apparatuses for workpieces have a horizontal configuration so that it will be necessary to increase the dimensions of said apparatuses and the space occupied by them on the floor of facilities in order to assure their suitable operation.

Furthermore, it can be noted that fixing devices for workpieces known from the state of the art are in their majority manually operated, that is, an operator is usually required for normally handling the device such that same is placed in a locked or unlocked position. Such handling process is of course neither practical nor safe since these apparatuses for working workpieces have a relatively strong force and any oversight during handling may cause operators to suffer accidents.

It is known from the state of the art some types of fixing devices for working pieces, comprising movable press jaws; however, all of them have a horizontal actuation configuration and/or a manual actuation mechanism, which do not solve the above mentioned known problems. For example, documents MU 8501868-6, MU 8800622-0, CN 201505858, EP 1555084, US 4038749 and US 5415383 relate to vise-type devices which represent the above-mentioned state of the art.

More particularly, as formerly mentioned, it is observed that most of said devices known from the state of the art disclose a horizontal configuration, more specifically, having horizontally-disposed actuation mechanisms, and this fact affects the design and mounting of said apparatuses in general. This stems from the fact that such apparatuses need to be designed with a larger space for accommodation of these actuators horizontally and, consequently, they affect accommodation and installation of the apparatuses in the facilities

Hence, it can be noted that such apparatuses and mainly those fixing devices for workpieces known from the state of the art present drawbacks and limitations directly affecting the security of the operators, but especially rigidity and accuracy concerning fixation of workpieces. More specifically, it is observed that manual devices fail as far as rigidity is concerned and many times also fail to accurately position the workpieces, which ends up compromising the final quality of the worked (machined, formed, reduced or expanded) work piece.

Moreover, it is verified that fixing devices for workpieces known in the prior art are composed of a relatively complex structure, with a combination of workpieces and components which make it difficult to manufacture, mount and maintain the apparatuses. Furthermore, this manufacture/mounting complexity directly affects costs, and mainly the work piece fixation accuracy, thus compromising the quality of works carried out on said workpieces.

Despite the fact that they show to be functional hitherto, it is observed that fixing devices for workpieces, for example, in apparatuses, e.g. lathes, milling machines and other especial apparatuses, as those already known from the state of the art, present restrictions and drawbacks, mainly concerning rigidity, efficiency and accuracy in the fixation of workpieces to be worked. It occurs that such drawbacks and restrictions will then affect security levels, which of course puts at risk the physical integrity of operators.

### Objects of the Invention

By this way, in view of the foregoing, an object of the present invention is to provide a fixing device for workpieces, particularly useful for an apparatus of lathe or milling-machine type, and other especial devices capable of effecting works of machining, forming, reducing or expanding workpieces, wherein said device is composed of technical and functional features capable of improving and enhancing security levels, and, mainly promoting fixation of the connector-type workpieces, which are also known as passing tubes.

More preferably, one object of the present invention is to provide a fixing device for workpieces, whose features assure suitable locking of workpieces to be worked. Additionally, said device is automatically driven by means of actuators disposed such that they can optimize the dimensions of the apparatus as a whole.

In a particularly advantageous way, yet another object of the present invention is to provide a fixing device for workpieces, the configuration of which keeps the movement of the actuator perpendicular to the press jaw opening/closing movement, which aids in the optimization of the space.

Further, an object of the present invention is to provide a fixing device for workpieces, whose construction is relatively simple and shows a high degree of robustness capable of extending service life of said devices as well as assuring a resistant and precise fixation such that the process for working a work piece is as precise as possible.

### Summary of the Invention

Therefore, to obtain the objects and technical effects as commented above, the present invention refers to a fixing device for workpieces, which is driven by at least one actuator that moves an advance rod, on which movable locking elements rest, which are in contact with press jaws which are responsible for fixing the workpieces to be worked, wherein said press jaws move perpendicularly to the movement of said advance rod.

In accordance with the present invention, said actuator can be of pneumatic, hydraulic, electric type or any other mechanism capable of effecting a final linear movement.

In a preferred embodiment of the fixing device for working pieces, in accordance with the present invention, said advance rod comprises a configuration having a V-section profile. In addition, in a further preferred embodiment, the inner surface of said advance rod has a difference in level for accommodating the movable locking elements, more specifically when the device of the present invention is in the locked position to safely lock the press jaws.

In an alternative embodiment of the fixing devices for workpieces, in accordance with the present invention, said advance rod comprises a cylindrical configuration, wherein in this case, said movable locking elements present a spherical configuration, which are disposed at, and in contact with, the inner surface of said advance rod and said press jaws.

In a particularly advantageous embodiment of the present invention, the automatic fixing device for workpieces comprises a main carcass having a configuration suitable to be connected with apparatuses of lathe and milling machine types, and other especial apparatuses capable of conducting works of machining, forming, reducing or expanding types, wherein internally said carcass houses an advance rod driven by an actuator, wherein on said advance rod movable locking elements, preferably roller-type, are disposed, which are brought into contact with press jaws responsible for fixing the workpieces and move perpendicularly to the movement of said advance rod.

Said press jaws are further provided with return elements responsible for opening and moving away so as to release the workpieces after machining work. Said return elements are preferably springs, but of course other equivalent components can be easily applied to the device of the present invention, either manual or automatic, depending on the specifications required by the manufacturers.

In accordance with the preferred embodiment of the present invention, the automatic fixing device for workpieces is preferably applied to apparatuses such as lathes, milling machines and other especial apparatuses which are capable of effecting works such as machining, forming, reducing or expanding a work piece.

### Brief Description of the Drawings

Features, advantages and technical effects of the present invention, as mentioned above, will be better understood by a person skilled in the art from the detailed description given below by way of example, with no limitation, of a preferred embodiment, and making reference to the attached schematic drawings, in which:
Fig. 1 is a perspective view of the automatic fixing device for workpieces in accordance with a preferred embodiment of the present invention;
Fig. 2 is a cut view of the automatic fixing device for workpieces in accordance with the present invention, in the locked position; and
Fig. 3 is a cut view of the automatic fixing device for workpieces in accordance with the present invention, in the unlocked position.
Fig. 4 is an enlarged view of the press jaws of the automatic device in the moved away-position.

### Detailed Description of the Invention

According to the schematic figures indicated above, some examples of preferred embodiments of the present invention will be described below in a more detailed form, but in a mere exemplificative and not limitative way, since the present fixing device for workpieces can comprise different details and structural and dimensional aspects without departing from the intended scope of protection.

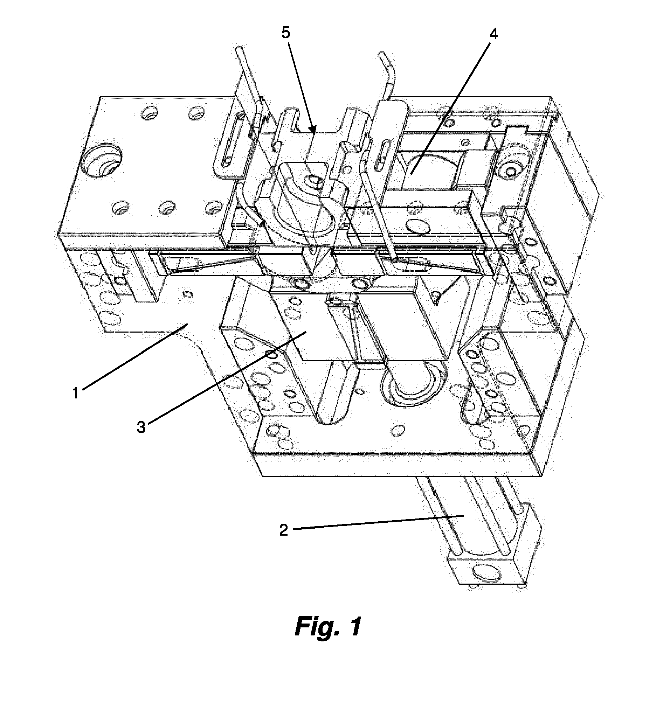

Fig. 1 is a perspective view of a an embodiment of the automatic fixing device for workpieces, in accordance with the present invention, wherein said device comprises a carcass 1 which base is provided with an actuator 2 to move an advance rod 3, on which there are supported movable locking elements 4 to particularly convey the press jaws 5 for suitable fixation of the work piece to be worked (machined, formed, reduced, expanded).

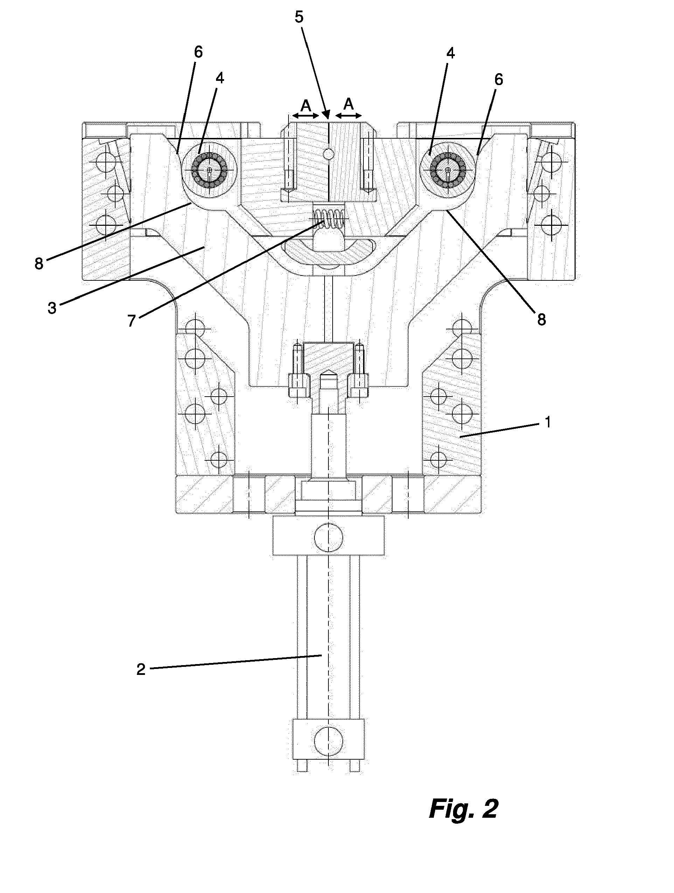

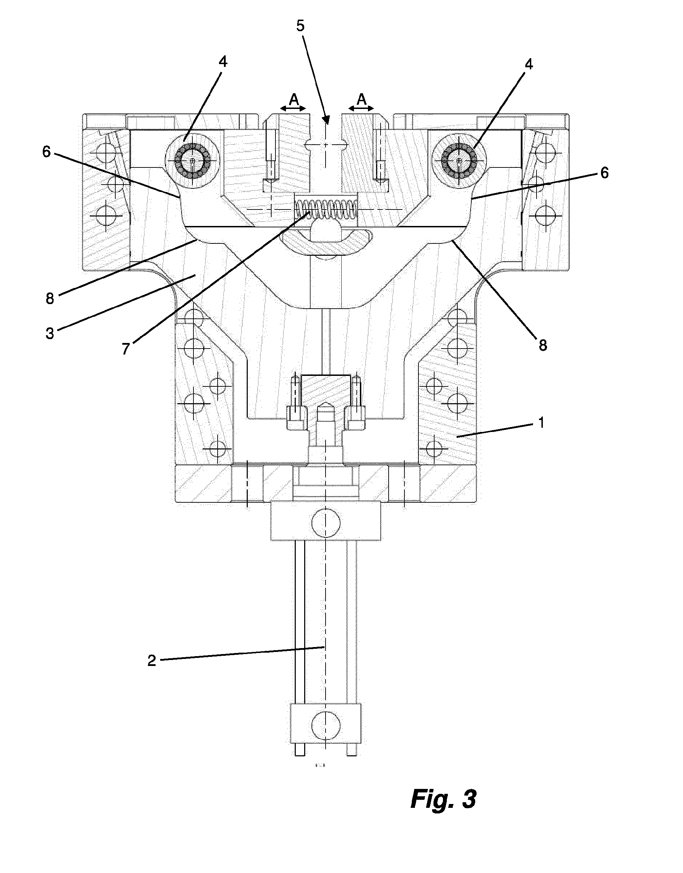

As can be seen from Figs. 2 and 3, said advance rod 3 is, in accordance with a preferred embodiment of the present invention, in a V-form, wherein the movable locking elements 4 are displaced over the inner surface 6 of said advance rod 3. In this embodiment, the movable locking elements 4 are advantageously in a roller configuration, which slide over said inner surface 6 of said advance rod 3. The inner surface 6 is a bent face which permits that the closing of the press jaw has an stroke adjustable in conformity with the variation of the fixed work piece; in brief, what is intended is that the locking of said press jaws occurs by wedge principle, wherein the actuator is driven, thus forcing the closing and locking of the work piece.

In an alternative embodiment of the present invention, said advance rod 3 has a cylindrical shape which involves the entire lower portion of the press jaws. In such a configuration, said movable locking elements can be a sphere, which is distributed on the inner surface of said advance rod 3.

Further, in accordance with Figure 2, in an advantageous embodiment of the present invention, the inner surface 6 of the advance rod 3 comprises a difference in level 8 on which said movable locking elements 4 are accommodated at the moment when said rod 3 displaces upward and positions said press jaws 5 in the locked position. Said difference in level 8 has the purpose of providing a relief for the device of the present invention.

As illustrated in Figures 2 and 3, by virtue of the movement of said advance rod 3, said movable locking elements 4 are displaced against said press jaws 5 to force them toward each other or away from each other, as shown by indicative arrows (A).

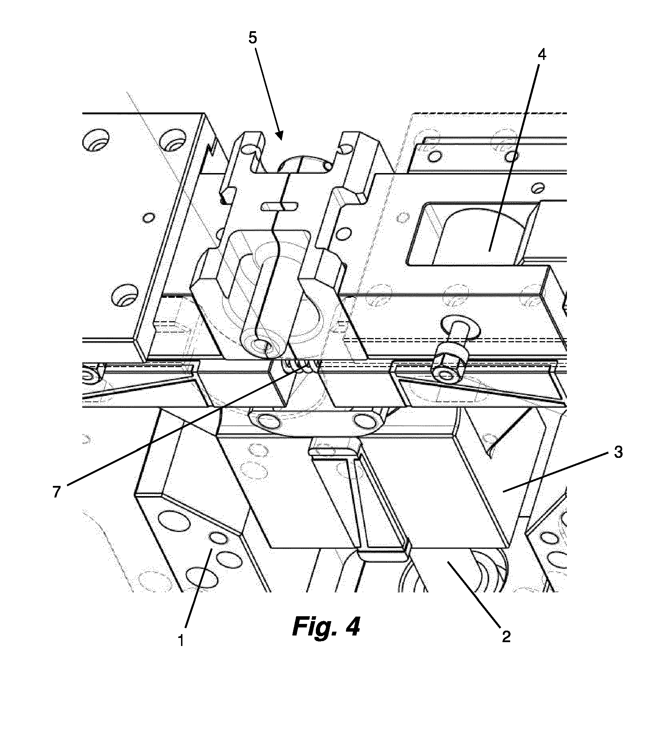

Particularly, from Figs. 2, 3 and 4, it can be noted that at the moment when said actuator 2 returns to the restrained original position, the advance rod 3 is also retrieved and, consequently, the movable locking elements 4 stop acting against the press jaws 5. More particularly, said movable locking elements are displaced to the upper portion of said advance rod 3. In this case, said press jaws 5 can comprise a return element 7 to force the separation of said press jaws and release the worked work piece.

Preferably, said return elements 7 are springs, but of course other equivalent components can be easily applied to the device of the present invention, either manual or automatic, which will depend on the specifications required by the manufacturers.

Additionally, in accordance with the present invention, said actuator 2 can be pneumatic, hydraulic, electric type or any other mechanism capable of effecting final linear movement.

In accordance with the preferred embodiments of the present invention, the automatic fixing device for workpieces is specifically intended to be installed in apparatuses such as lathes, milling machines and any other especial apparatuses of this nature capable of carrying out works of machining, forming, reducing, expanding, etc. As can be appreciated by a person skilled in the art, the configuration thereof can be applied to any type of apparatus needing a device for safely and precisely fixing any work piece, irrespective of the geometry or the material.

Additionally, for clarification purposes, the device of the present invention is preferably designed and developed for fixing workpieces, which are subjected to a machining process and subsequently to a process for forming the workpieces. In any case, as indicated above, the application of the present invention should not be limited to the types of processes and apparatuses cited above by way of example only.

It should be pointed out that the present invention can be preferably used in an apparatus which is the object of protection claimed in another patent application filed in the name of the same owner as the one of the present application.

It is worth to mention that the description above is only intended to describe by way of example some preferred embodiments of the fixing devices for workpieces in accordance with the present invention. Therefore, it is clear that a person skilled in the art will understand that several modifications, variations, and construction combinations of elements that perform the same function especially in the same form to achieve the same results are within the scope of the invention, which is limited by the appended claims.

## Claims

1. Automatic fixing device for workpieces, **CHARACTERIZED in that** it comprises a carcass (1) which base is provided with an actuator (2) to move an advance rod (3), on which movable locking elements (4) rest, which perpendicularly drive press jaws (5) to fix the work piece to be worked.

2. Automatic fixing device for workpieces, in accordance with claim 1, **CHARACTERIZED in that** said advance rod (3) is in a V-form.

3. Automatic fixing device for workpieces, in accordance with claim 1, **CHARACTERIZED in that** said movable locking elements (4) are in roller configuration, which displace on the inner surface (6) of said advance rod (3).

4. Automatic fixing device for workpieces, in accordance with claim 1, **CHARACTERIZED in that** said advance rod (3) has a cylindrical form, which involves the lower portion of said press jaws (5).

5. Automatic fixing device for workpieces, in accordance with claim 4, **CHARACTERIZED in that** said movable locking elements (4) are sphere type, which are distributed on said inner surface (6) of said advance rod (3).

6. Automatic fixing device for workpieces, in accordance with claim 1, **CHARACTERIZED in that** said inner surface (6) of the advance rod (3) comprises a difference in level (8) for relief, on which said movable locking elements (4) are accommodated at the moment when said rod (3) displaces, in the locking position.

7. Automatic fixing device for workpieces, in accordance with claim 1, **CHARACTERIZED in that** said press jaws (5) comprise return elements (7), preferably spring type.

8. Automatic fixing device for workpieces, in accordance with claim 1, **CHARACTERIZED in that** said actuator (2) is pneumatic, hydraulic, electric type or any other mechanism capable of carrying out the final linear movement.
